Europäisches Patentamt

European Patent Office

Office européen des brevets

(11) Veröffentlichungsnummer: **0 189 901**
**B1**

(12) **EUROPÄISCHE PATENTSCHRIFT**

(45) Veröffentlichungstag der Patentschrift:
**25.07.90**

(21) Anmeldenummer: **86101111.2**

(22) Anmeldetag: **28.01.86**

(51) Int. Cl.⁵: **H04N 5/63**

54 **Bildröhrenheizung.**

(30) Priorität: **30.01.85 DE 3503000**

(43) Veröffentlichungstag der Anmeldung:
**06.08.86 Patentblatt 86/32**

(45) Bekanntmachung des Hinweises auf die Patenterteilung:
**25.07.90 Patentblatt 90/30**

(84) Benannte Vertragsstaaten:
**BE DE FR GB IT NL**

(56) Entgegenhaltungen:
**EP-A- 0 163 235**
**GB-A- 2 085 270**
**US-A- 3 801 856**
**US-A- 3 956 669**

(73) Patentinhaber: **Nokia Unterhaltungselektronik (Deutschland) GmbH, Östliche Karl-Friedrich-Strasse 132, D-7530 Pforzheim(DE)**

(72) Erfinder: **Reh, Klaus, Panoramastrasse 18, D-7321 Albershausen(DE)**

## Beschreibung

Die Erfindung bezieht sich auf eine Bildröhrenheizung für einen Fernsehempfänger gemäß dem Oberbegriff des Anspruchs 1.

Ein derartiger Fernsehempfänger ist aus der DE-AS 23 22 875 bekannt. Bei diesem bekannten Fernsehempfänger sind in der Zeilenendstufe Thyristoren eingesetzt, deren Rücklaufthyristor über einen Ansteuertransformator mit dem Zeilenoszillator verbunden ist. In der Zuführung der Betriebsgleichspannung zu diesem Rücklaufthyristor ist ein Transformator vorhanden, von dem über eine besondere Sekundärwicklung die benötigte Heizspannung für die Bildröhre entnommen wird.

Der Erfindung liegt die Aufgabe zugrunde, eine einfachere Art der Gewinnung der Heizspannung für die Bildröhre anzugeben.

Die Lösung dieser Aufgabe erfolgt mit den im Anspruch 1 angegebenen Mitteln. Eine vorteilhafte Ausgestaltung der Erfindung ist im Unteranspruch 2 enthalten.

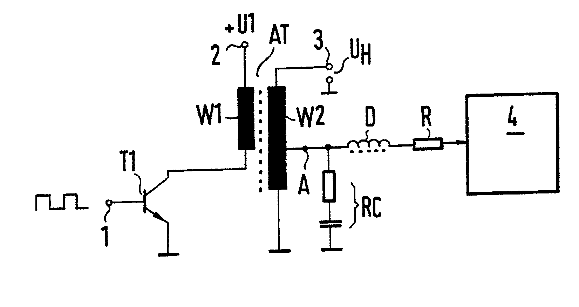

Die Erfindung wird nun anhand eines in der Figur gezeigten Ausführungsbeispieles näher erläutert. In der Figur ist schematisch die Ansteuerschaltung einer Horizontalablenkschaltung dargestellt.

Die Ansteuerschaltung weist einen Transistor T1 auf, dessen Basis mit einer Eingangsklemme 1, dessen Emitter mit dem Massepotential und dessen Kollektor über die Primärwicklung W1 des Ansteuertransformators AT mit einer Klemme 2 verbunden ist. An der Eingangsklemme 1 liegt eine Impulsfolge an, die von einem nicht dargestellten Zeilenoszillator abgegeben wird. An der Klemme 2 ist eine positive Betriebsspannung U1 angeschaltet. Die Sekundärwicklung W2 des Ansteuertransformators AT liegt mit ihrem einen Ende auf Massepotential. An die Anzapfung A der Sekundärwicklung W2 ist ein mit dem Massepotential verbundenes RC-Glied und über eine Drossel D in Reihe mit einem Widerstand R die Zeilenendstufe 4 angeschaltet. Die Zeilenendstufe ist in üblicher Weise aufgebaut und enhält beispielsweise einen Transistor und die Ablenkwicklung für die horizontale Ablenkung des Elektronenstrahles der Bildröhre.

Die Sekundärwicklung W2 des Ansteuertransformators AT ist als Spartransformator ausgebildet, dessen oberer Anschluß mit der Klemme 3 verbunden ist. Von dieser Klemme 3 kann die Heizspannung $U_H$ für die nicht dargestellte Bildröhre abgenommen werden. Diese einfache Gewinnung der Heizspannung $U_H$ für die Bildröhre aus dem Ansteuertransformator AT für die Zeilenendstufe hat den Vorteil, daß eine sehr genaue Feinabstimmung der Heizspannung möglich ist, da der Ansteuertransformator eine sehr niedrige Windungsspannung aufweist.

## Patentansprüche

1. Bildröhrenheizung für einen Fernsehempfänger, dessen Horizontalablenkschaltung einen Ansteuertransformator aufweist, an dessen primärseitigem Eingang das Ausgangssignal eines Zeilenoszillators liegt und an dessen Sekundärseite eine Zeilenendstufe angeschlossen ist, dadurch gekennzeichnet, daß die Sekundärwicklung (w2) des Ansteuertransformators (AT) durch zusätzliche Windungen erweitert ist, an denen die Heizspannung (UH) für die Bildröhre abgreifbar ist.

2. Bildröhrenheizung nach Anspruch 1, dadurch gekennzeichnet, daß die Heizspannung (UH) aus der zu einem Spartransformator erweiterten Sekundärwicklung (W2) des Ansteuertransformators (AT) entnommen wird.

## Claims

1. Picture tube heater for a television receiver, whose horizontal deflector has a drive transformer at whose primary side input the output signal of a line oscillator is present and at whose secondary side a line output stage is connected, characterized by the fact that the secondary winding (w2) of the drive transformer (AT) is extended by means of additional turns from which the heater voltage (UH) for the picture tube can be tapped.

2. Picture tube heater according to Claim 1, characterized by the fact that the heater voltage (UH) is tapped from the secondary winding (W2) of the drive transformer (AT) which has been extended to form an autotransformer.

## Revendications

1. Chauffage de tube image pour un récepteur de télévision dont le circuit de déflexion horizontale est pourvu d'un transformateur de commande à l'entrée côté primaire duquel est appliqué le signal de sortie d'un oscillateur de ligne et au côté secondaire duquel est raccordé un étage final de ligne, caractérisé en ce que l'enroulement secondaire (w2) du transformateur de commande (AT) est étendu par des spires supplémentaires auxquelles la tension de chauffage (UH) pour le tube image peut être prélevée.

2. Chauffage de tube image selon la revendication 1, caractérisé en ce que la tension de chauffage (UH) est prélevée de l'enroulement secondaire (W2), étant étendu pour former un transformateur diviseur de tension, du transformateur de commande (AT).